# EUROPEAN PATENT APPLICATION

(11) **EP 3 506 560 A1**
(43) Date of publication of application: **03.07.2019**
(21) Application number: 17306984.0
(22) Date of filing: 29.12.2017
(51) Int. Cl.: H04L 9/32, H04L 9/00, H04L 9/08

(54) **SECURE PROVISIONING OF KEYS**

(71) Applicant: Nagravision S.A., 1033 Cheseaux-sur-Lausanne (CH)
(72) Inventor: GREMAUD, Fabien, 1033 Cheseaux-sur-Lausanne (CH); FISCHER, Nicolas, 1033 Cheseaux-sur-Lausanne (CH); VILLEGAS, Karine, 1033 Cheseaux-sur-Lausanne (CH); FISCHER, Jean-Bernard, 1033 Cheseaux-sur-Lausanne (CH)
(74) Representative: Hoyng Rokh Monegier LLP

(57) **Abstract**

Methods and devices in accordance with the disclosure relate to the secure provision of one or more keys or key pairs to protect secret data for, or associated, with a computing device. The device is typically a computing device with at least one processor or processing module configured for executing one or more applications using the secret data. The present disclosure ensures secure key provisioning by ensuring that each key in a key pair, or at least one key among a plurality of keys is associated with a device or hardware module that is distinct to the device(s) or hardware module associated with the other or remaining keys. For asymmetric key provisioning, this relates to utilizing digital signatures verified by separate devices. For symmetric key provisioning, this relates to utilizing a secret key derivation function that will operates with secret seeds that are input from two separate sources.

## Description

### FIELD

The present disclosure relates to methods and devices for the secure provision of a key or keys to protect secret data for, or associated, with a device configured for executing one or more applications using the secret data.

### BACKGROUND

Devices responsible for implementing one or more process using protected or secret data may be associated with a unique code identity or other associated data, commonly in the form of a unique secret which is usually the root secret of the device, known as the RootOfTrust (RoT). RoT is a set of functions in a trusted computing environment, where aspects related to the computer, i.e. the device, or it's security is dealt with through hardware and associated software processes or enhancements. Thus, this may be embedded instructions that are always trusted by the operating system (OS) of the module. The RoT may be a separate compute engine controlling the security of device specific credentials, which can be accessed from the device unique secret data or identifier through the RoT. Hence the device unique or secret data must be secured in order that specific credentials are not compromised by an attacker.

An example of such devices may be a System on chip (SoC) device, which may be initially produced without a unique identity. This is later provided by a system during the production life-cycle of the SoC/device. Various key management protocols may be used to secure the unique identity of a SoC/device, such as symmetric and asymmetric key pairs or a combination of both, which are implemented for the SoC or device. This commonly includes processes using Public Key Infrastructure (PKI) as a key and key certificate management system for key protection, recovery and backup. However, the security of device identity and/or keys associated with the SoC/device can be compromised if the device itself responsible for the keys is hacked or attacked, thereby allowing access to the unique identity or key during and/or after existing key provisioning and management process, either by an impersonator or by other types of attacks.

For this reason, there is a need for an improved and robust method of key provisioning that provides protective measures against device cloning and impersonating, when the security of the device is compromised.

### BRIEF DESCRIPTION OF THE DRAWINGS

Various embodiments are now described by way of example for the purpose of explanation and illustration, with reference to the accompanying drawings in which:
FIG.1 is a schematic depicting a first embodiment of the disclosure for the provision of asymmetric keys for a device;
FIG.2 is a schematic depicting a second embodiment of the disclosure for the provision of asymmetric keys for a device;
Fig.3 is a schematic depicting a third embodiment to show a key management system for the provision of keys for a device; and
Fig.4 is an example implementation of a device according to the described embodiments.

### DETAILED DESCRIPTION OF THE DRAWINGS

In overview, the methods and devices in accordance with the disclosure relate to the secure provision of one or more keys or key pairs to protect secret data for, or associated, with a computing device. The device is typically a computing device with at least one processor or processing module configured for executing one or more applications using the secret data. In a main aspect, the present disclosure ensures secure key provisioning by ensuring that each key in a key pair, or at least one key among a plurality of keys is associated with a device or hardware module that is distinct to the device(s) or hardware module associated with the other or remaining keys.

The computing device for which keys are generated may be a System on Chip, comprising an embedded trusted hardware module such as the Root of Trust (RoT). For example, the device's secret data may be a unique identifier or code that is embedded in the trusted module, and such secret data may be needed by the device or an external system or module to either load the respective device specific credentials that enables access to one or more applications (e.g. a right for the payTv). Therefore, the device secret data should be secured using one or more keys so that device specific credentials are not cloned or tampered with by an attacker.

A first embodiment of the present disclosure relates to a secure method of asymmetric key provisioning in a device that can execute applications using secret data. In existing methods and systems, this is usually implemented using well-known asymmetric key algorithms (e.g. RSA, DSA, etc.), whereby the public key infrastructure (PKI) generates the public and private keys that are then managed by the key management system (KMS). Yet, as mentioned above, existing procedures do not stop attackers from gaining access to the keys by cloning or impersonating the device, as this asymmetric key generation process is executed entirely within the PKI using the cloned device.

To overcome this problem, the first embodiment uses adapted asymmetric key pair generation algorithms and a key exchange infrastructure which requires authentication of the device identity from at least one other, for example external device. In a preferred manner, this takes place by implementing or employing a certificate authority (CA) in or associated with the device itself (referred to herein as the first device for clarity) and an external device that acts as an independent CA to verify the identity of, or verify a public key associated with the device in question.

It is well known in relation to PKI that that a certificate, or a public key certificate also known as a digital certificate or identity certificate, is an electronic document used to prove the ownership of a public key. The certificate includes information about the key, information about the identity of its owner (commonly called the subject), and the digital signature of an entity that has verified the certificate's contents (called the issuer or a certificate authority). Thus, a digital certificate certifies the ownership of a public key.
This guarantees at least two stages of certificate or device identity verification of the public key using at least two different entities. As a result, even if the first device is compromised, the verification of the keys cannot be successfully completed, and therefore the asymmetric key or key pair cannot be used for any further processing, without first having its identity confirmed by both devices (first and external in this example in question).

A second embodiment of the present disclosure relates to a method of symmetric key provisioning in a device. In existing methods and systems, this is usually implemented through symmetric key algorithms (e.g. DES, AES etc.), or a key derivation function (KDF) which derives its key(s) from a secret seed(s), i.e. these being the starting point of a random number generator module, for instance. However, a similar problem described above in relation to the previous embodiment arises when using known key generating algorithms for symmetric keys. With KDFs, a secret seed may be generated within the device itself, and later processed by the KDF to generate the key. When the KDF relies on only internal and secret value, i.e. no external salt that could bring entropy and diversifier, this has similar challenges in that the security of the device cannot be guaranteed from attacks by cloning or impersonation of the device, thereby which could result in unauthorized access to generate and indeed use generated keys.

To overcome this problem, the second embodiment of this disclosure implements a method that obtains at least one secret seed from an external secure source, in addition to the device for a KDF, which is then used to generate symmetric keys. In a preferred aspect, one secret seed is generated in the device itself, and the second is provided from an external source, which can also contain further information (e.g. unique identifier, other keys, etc.). Here a first device may be connected to the secure source configured for generating the second secret seed required for symmetric key generation. Various security measures and key exchange protocols may then be implemented to confirm the first device's identity and allow the secure transfer of the secret seed from the secure source to the first device, preferably via another device such as a hardware security module (HSM) for transporting the keys. As a result, even if the first device is compromised, it will not gain access to all inputs that the KDF requires for symmetric key generation unless the first device's identity is confirmed and can decrypt information received from the secure source.

Further embodiments of the present disclosure extend to and include the provisioning of keys by using a combination of both asymmetric and symmetric key generation methods as described above.

A third embodiment of the present disclosure relates to a method of secure key management for the device. This relates to managing the transfer, storage, access and generation of secure keys at a KMS for secure storage. This is to provide a secure manner of enrolling or generating the asymmetric and/or symmetric keys, where at least one key or one key in a key pair has been verified and/or generated in association with at least one device or source other than the first device.

Some specific embodiments are now described by way of illustration with reference to the accompanying drawings in which like reference numerals refer to like features.

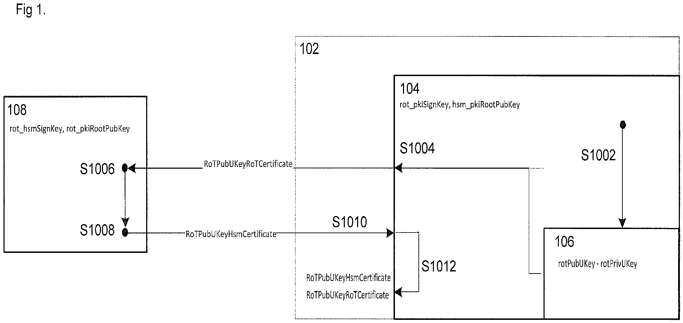

Fig. 1 is a schematic representing the first embodiment referring to secure asymmetric key provisioning for protecting device secrets. In this embodiment, a first device 102 that is capable of executing applications requiring use of a unique identity or secret identity is connected via a wireless or wired communication network to at least one other external device 108. The first device 102 may be configured to process a predefined asymmetric key generation algorithm, such as RSA, DSA, etc. to generate an asymmetric key pair. This may also be generated by an external module and then sent to the device. The device 102 and external device(s)108 will then each sign and verify digital certificates for the generated asymmetric public key. The two factors verification of digital signatures or certificates ensures that the identity of the device issuing the public key is verified by two separate hardware sources, i.e. the device 102 and the external module 108. This ensures that asymmetric keys cannot be verified for further access or encryption if any of the two devices is compromised.

As seen in Fig 1, an example implementation of the embodiment comprises a device 102 (also referred to as the first device herein) which preferably includes a RoT module 104 and a One Time Programmable (OTP) Storage module 106 in the RoT 104. The device 102 is communicatively coupled to a second device, which is preferably a HSM 108 in a manufacturing facility or environment.

The RoT 104 may be configured to implement a PKI to generate asymmetric and symmetric keys through known key algorithms or by using a KDF. The RoT 104 and HSM 108 are implemented as CAs, with functionality to verify the origin of data or a key. They are each configured to have their respective PKI sign keys, indicated herein as rot_pkiSignKey, rot_hsmSignKey, that allow them to generate digital signatures or certificates. RoT 104 also contains a public key of HSM 108, indicated herein as hsm_pkiRootPubKey, and HSM [108] contains a public key of the RoT 104, indicated herein asrot_pkiRootPubKey, which can be used to access each other's respective data, for authorising certificates signed by the corresponding sign keys.

In step S1002 the RoT 102 first generates the asymmetric keys through an asymmetric key algorithm (e.g. RSA, DSA, etc.) and stores both public and private asymmetric keys associated with the device, indicated herein as rotPubUKey, rotPrivUKey, respectively, in the OTP storage 106. As mentioned before, these keys may also be generated from an additional module associated with the device which can generate keys based on random number generation.

In step S1004, further measures may be implemented to ensure public key security, where the OTP storage 106 may provide the rotPubUKey to the RoT 104 to be signed with sign key rot_pkiSignKey. This generates a first certificate, indicated herein as rotPubUKeyRoTCertificate, associated with rotPubUKey, which is then sent from the RoT 104 to the HSM 108.

In step S1006, the HSM 108 verifies the first certificate with the rot_pkiRootPubKey of the RoT 104, and thereby confirms the identity of device102.

In step S1008, once verification is successful, the HSM 108 then signs rotPubUKey, which is extracted from the verified certificate, i.e. rotPubUKeyRoTCertificate with its sign key rot_hsmSignKey, thereby creating a second certificate, herein indicated as rotPubUKeyHsmCertificate.

In step S1010, the rotPubUKeyHsmCertificate is sent to the RoT 104 to be verified with hsm_pkiRootPubKey of HSM 108.

In step S1012, once the verification in S1010 is successful, the first and second certificates, i.e. rotPubUKeyHsmCertificate, rotPubUKeyRoTCertificate as obtained from the steps above, are made available for storage and/or further usage in the device 102 or enrolled in a KMS or another storage module for further use.

Thus, the method of asymmetric key generation requires the digital signature associated with the device public asymmetric key to be verified using two separate devices. This implementation also requires the use of sign keys from two separate devices for this. The second device is not limited to a HSM, and any device can be used provided that it can perform the task of signing and verifying digital certificates.

An alternative and related implementation of the first embodiment may involve the use of two or more devices where signing and verification of the asymmetric public key can be processed two or more times to provide extra layers of security. Therefore, the embodiment is not limited to the first device being connected to only one external device.

An exemplary implementation of the device according to the first embodiment includes a device 102 having one or more processing units 104, a memory unit 106 and ports for sending and receiving data, and being communicatively coupled to at least one HSM 108. The device 102 is then configured to executing at least the following functions, which are also exemplified in the above description in relation to the first embodiment:
(a) generate an asymmetric encryption key pair for the device; the key pair comprising a device public key and a device private key. For example, the asymmetric key pair is preferably generated using a Physical Unclonable Function. PUF. The asymmetric encryption key pair is preferably not stored in memory, but rather is regenerated using the PUF.
(b) digitally sign the device public key to generate a first certificate;
(c) transmit the first certificate to a first hardware module for verification;
(d) if the verification of the first certificate is successful, receive a second certificate from the first hardware module, the second certificate being digitally signed by the first hardware module;
(e) verify the second certificate at the device;
(f) responsive to the verification being successful; provision the first and second certificates for storage and/or further usage.

An exemplary implementation of the HSM 108 for the first embodiment includes a HSM 108 that is communicatively coupled to the device 102, and includes one or more processing modules configured to:
(a) receive a first certificate from the device, the first certificate generated by digitally signing a device public key of an asymmetric encryption key pair of the device;
(b) verify the first certificate at the hardware module;
(c) if verification is successful, digitally sign the device public key to generate a second certificate;
(d) transmit the second certificate to the device for verification, and if verification is successful making available the first and second certificates for storage and/or further usage.

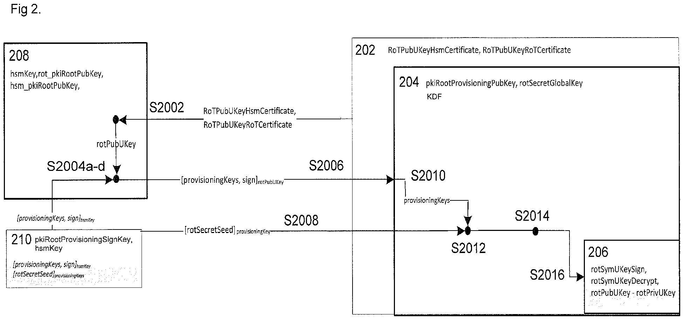

Fig. 2 is a schematic in accordance with the second embodiment of the disclosure for secure symmetric key provisioning for protecting device secret data or unique code(s). In one aspect, this embodiment can be implemented by connecting a device 202, referred herein as a first device 202, via a network, which may be wireless or wired, with at least one other external device 208. As in the first embodiment, the device 202 is associated with a RoT 204 In order for a symmetric key to be generated, a secret KDF that is implemented within the first device's RoT 204 is configured to generate symmetric keys from at least two inputs. For example, these inputs may be in the form of at least two secret seeds that are obtained from at least two different devices or sources. Without the provision of at least one secret seed from an external device or a source that is different to the other of the at least two secret seeds, the first device 202 will not be able to implement or apply the secret KDF to generate the symmetric keys. Further secure exchange protocols may be employed to ensure the secure transfer of an external secret seed from an external device. The first device will be able to access and decrypt the external secret seeds if its identity can be confirmed using at least two different sources, one of which is external to the first device 202 .

As seen in Fig. 2, the device 202, which is herein also referred to as a first device202 may include similar components and structure as the device 102 of Fig. 1, i.e. RoT 204, OTP storage 206, etc. In addition to this, device 202 is communicatively coupled to another device, which may be a HSM 208 and also communicatively coupled to a secure source which is external to the device 202, and preferably HSM 208.210. The secure source 210 is preferably communicatively coupled with the HSM 208. The HSM 208 is also referred to as a second HSM, which may be the same or a different entity to that of HSM 108 of Fig. 1, in this embodiment.

The second HSM 208 may be configured to already have access to, or can securely obtain the public key of a further HSM, such as for example, the first HSM 108 of Fig 1, which may be one of the CAs responsible for the verification of an asymmetric key pair generated for the device 202. In addition, the second HSM 208 may hold the rot_pkiRootPubKey of the RoT 204 and the HSM's 208 own public key, indicated herein as hsmKey, in order to implement key exchange protocols with the device 202 based on a PKI for authentication and transferring data and keys between the secure source210 and the device 202.

The HSM 208 allows to bind a unique generated secret of the RoT, with a unique generated personalisation image during production also called post-association obtained for instance by using the secure source 210 described above. In a preferred example implementation, the secure source 210 may be is configured to be provided with provisioning keys, provisioningKeys, a first secret seed, referred to as rotSecretSeed, which is a unique identifier for the device during production, the public hsmKey of the second HSM 208 and a provisioning sign key referred as pkiRootProvisioningSignKey, used for any data that is to be sent to the device [202] from the secure source [210].

The RoT 204 in device 202 further comprises public provisioning keys, indicated as pkiRootProvisioningPubKey for verification of signatures from the secure source 210, and is also configured to securely store at least one further seed referred to herein as the second seed, indicated as rotSecretGlobalKey. Preferably, this is a secret global key rotSecretGlobalKey unique to the device, which is obtained, stored or generated within a trusted module within the device 202. The RoT 204 is also configured to implement a secret KDF to generate the symmetric keys.

In order for symmetric keys to be generated, the RoT 204 requires inputs that enable a KDF to be implemented. In a preferred implementation of the second embodiment, these inputs are the first secret seed, rotSecretSeed, second secret seed rotSecretGlobalKey and an asymmetric public key, i.e. rotPubUKey pertaining to the device 202. It is assumed for this embodiment that the asymmetric key pair rotPubUKey, rotPrivUKey and certificates rotPubUKeyHsmCertificate, rotPubUKeyRoTCertificate for the device 202 have previously been generated for the device 202, for instance, by the steps set out in relation to Fig. 1. Thus, as the RoT 204 is already provided with rotPubUKey and rotSecretGlobalKey, the RoT 204 requires the rotSecretSeed from the secure source 210]in order to generate symmetric keys.

Secure protocols may be implemented to ensure secure delivery of the first secret seed from the secure source 210 to the RoT 204.

An example of how this process is performed for the second embodiment may be explained as follows. In step S2002, the device 202 sends rotPubUKeyHsmCertificate, rotPubUKeyRoTCertificate to the second HSM208 to confirm the identity of the device 202 that has issued the rotPubUKey for key exchange protocols. These certificates may be in one example the same as to the certificates referred to in the first embodiment of Fig 1. The second HSM 208 verifies both certificates by using the public keys, rot_pkiRootPubKey, hsm_pkiRootPubKey of the RoT 204 and a first HSM, that could be the same as HSM 108 of Fig. 1. Once verifications of both certificates are successful, the second HSM 208 can extract rotPubUKey for further usage.

In step S2004a, the secure source 210 ensures the security of the first secret seed rotSecretSeed, which in a preferred embodiment may be associated with a unique device identity or secret, by encrypting the rotSecretSeed with provisioningKeys.

In step S2004b, the secure source210 then signs provisioningKeys with the provisioning sign key, indicated herein as pkiRootProvisioningSignKey, generating a signature, and then encrypts the signed provisioning key with the public key hsmKey of the second HSM 208.

In step S2004c the signed and encrypted provisioning key, indicated as [provisioningKeys, sign] hsmKey, is then sent to the second HSM 208.

In stepS2004d the second HSM208 decrypts the signed provisioning key with hsmKey and encrypts it with rotPubUKey of the device202. This can then be decrypted by rotPrivUKey of the asymmetric key pair of device 202 and verified by the public key pkiRootProvisioningPubKey. Thus, the second HSM 208 has decrypted the signed provisioning key with its own private key before re-encrypting it with the device public key and is responsible for the secure transfer of these provisioning keys to the device 202 which implements the secret KDF. Using a HSM such as HSM 208 advantageously ensures that there is reliance at least on two elements to generate the symmetric keys.

In stepS2006, the encrypted provisioning key, indicated herein by [provisioningKeys, sign]rotPubUKey, is then sent to the RoT 204.

In step S2010, this is decrypted by the rotPrivUKey, and then the provisioning key signature is verified using the pkiRootProvisioningPubKey. After successful decryption and verification at the RoT 204, the provisioningKeys are then made available to the RoT 204 for further use.

In parallel with steps S2006 and S2010 above, the secure source 210 sends the rotSecretSeed, encrypted by the provisioningKeys, herein indicated by [rotSecretSeed]provisioningKey, to the RoT 204 in step [S2008].

As the RoT 204 will by now be provided with access to provisioningKeys, it can verify and decrypt the rotSecretSeed] which is performed in step S2012. This makes the rotSecretSeed available for symmetric key generation through a secret KDF in the RoT [204].

In step S2014, the RoT 204 then utilises the rotSecretSeed, rotSecretGlobalKey and rotPubUKey to generate the symmetric keys rotSymUKeySign, rotSymUKeyDecrypt with the secret KDF.

In step S2016, the generated symmetric keys are then stored in the RoT [04, the OTP storage [206], or may be sent to a KMS for further use.

Thus, the method of symmetric key generation according to the second embodiment involves a secret KDF which requires at least one secret seed from an external secure source 210, besides a secret seed from the device 202 that executes applications requiring the secrets that are protected by these keys.

The present disclosure is not limited to a single secure source, and multiple secure sources can be coupled to the device 202 which contains the respective secret seeds required for symmetric key generation through a secret KDF in the RoT 204.

Furthermore, any device that can perform the task of signing and authorising digital certificates as explained above for the secure transport of the provisioning keys, may be used as or instead of the HSM 208 for the secure provision of the secret seed to the device [202].
For instance, an alternative implementation of the second embodiment could involve the device202 coupled with only one secret external source. In this case, secure key and data exchange mechanism will need to be implemented to secure transfer of the secret seed from this single external secret source. The single secure source may then in one aspect need to implement the functions of both HSM [208] and the secure source [210] as described in Fig. 2.

In one example implementation, the device 202 includes a memory unit, one or more transceiver units and one or more processing units, and is communicatively coupled to a HSM 208, and the device 202 is configured to:
(a) receive from a second hardware module a provisioning key encrypted with a device public key of an asymmetric key pair that has been verified using first and/or second certificates, wherein the provisioning key is decrypted using a device private key of the asymmetric key pair associated with the device and;
(b) receive from a secure external source, a first secret seed signed by the provisioning key, wherein the first secret seed is verified and decrypted using the decrypted provisioning keys; and
(c) generate a symmetric encryption key or keys using a secret key derivation function with inputs comprising the first secret seed, the device public key and a second secret seed; wherein the second secret seed is obtained, stored or generated in the device;
(d) wherein the processing units of the device 202 optionally include the device of102of the first embodiment.

In a further example the HSM 208 is communicatively coupled to the device202, and includes one or more processing modules configured to:
(a) verify a device public key of an asymmetric key pair associated with the device using first and/or second certificates of the asymmetric key pair for the respective device;
(b)receive a provisioning key from a secure source, the secure source being communicatively coupled with the device and the hardware module;
(c) responsive to successful verification of the first and/or second certificates, transmit the provisioning key encrypted with the device public key to the device for decryption, wherein the provisioning key enabled the device to use a first secret seed received from the secure source to generate a symmetric key with a second secret seed stored or generated by the device.

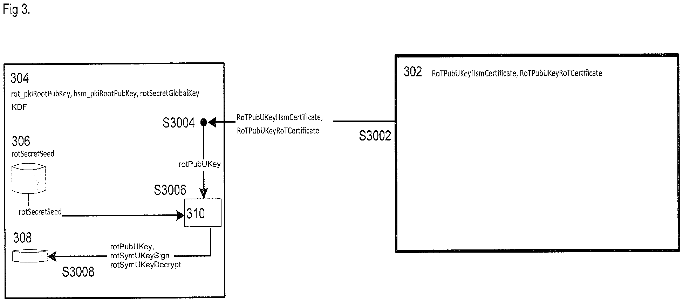

A third embodiment of the disclosure involves the secure enrolment of asymmetric and/or symmetric keys associated with a device for executing applications requiring secrets, with a KMS. One example of the secure enrolment of asymmetric and/or symmetric encryption keys associated with a device to a KMS is shown in Fig. 3.

In a preferred embodiment, the device 302 may be in an example to the device102 in Fig 1 and/or the device 202 in Fig. 2.

Such device 302 is communicatively coupled to a KMS 304, which comprises at least a database 306 and memory storage 308, along with at least one processing module 310 for executing a KDF.

The KMS 304 in a preferred aspect is preconfigured to have access to a seed, for instance rotSecretGlobalKey, that is associated with the device 302 for generation of the symmetric keys; the public PKI keys, such as rot_pkiRootPubKey, hsm_pkiRootPubKey of the device [302]; and at least one HSM, which for example may be HSM 108 in Fig. 1 and/or HSM 208 in Fig. 2. The HSM is preferably one that has been responsible for prior verification of asymmetric public keys of the device 302. Additionally, the KMS 304 is also configured to hold a KDF, which is preferably the same as the secret KDF referred to in Fig 2 and is required for generation of symmetric keys associated with device 302.

The KMS 304 is also configured to obtain a further secret seed using secure communication protocols from an external source, which may be similar to the secure source 210 in Fig 2., for storage in the database 306.

In step S3002, the device 302 sends its previously generated certificates rotPubUKeyRoTCertificate, rotPubUKeyHsmCertificate to the KMS 304.

In step S3004, the KMS 304 verifies the certificates with their respective public keys, i.e. rot_pkiRootPubKey, hsm_pkiRootPubKey to gain access to the rotPubUKey of the device 302.

In step S3006 the KMS 304 is then configured to generate the symmetric keys of device 302 by executing the KDF associated with device 302 in the processing module 310. This is computed with the rotSecretSeed from the database 306, and the rotSecretGlobalKey and rotPubUKey.

In step S3008, after the symmetric keys rotSymUKeySign, rotSymUKeyDecrypt have been regenerated, they are transferred with rotPubUKey into the memory 308 for further usage.

Accordingly, as exemplified by the present disclosure in Figs 1, 2 and 3, the keys for encryption for a device that executes applications requiring secret data; whether asymmetric or symmetric are provisioned by using either digital certificates (in the case of the first embodiment) or secret seeds for encryption (in the case of the second embodiment) generated from at least one additional secure hardware source, besides the device itself. This ensures that the keys are not susceptible to an attack by impersonation of the device or cloning of the device or HSM used in the above process. If either the device or indeed the HSM is cloned, the process requires inputs from both sources, so either the authentication will fail (in the first embodiment) as the CAs will not be issued to verify the identity of the device, or indeed a KDF cannot be executed (in the second embodiment) as either the keys or the secret seed will not be able to be obtained.

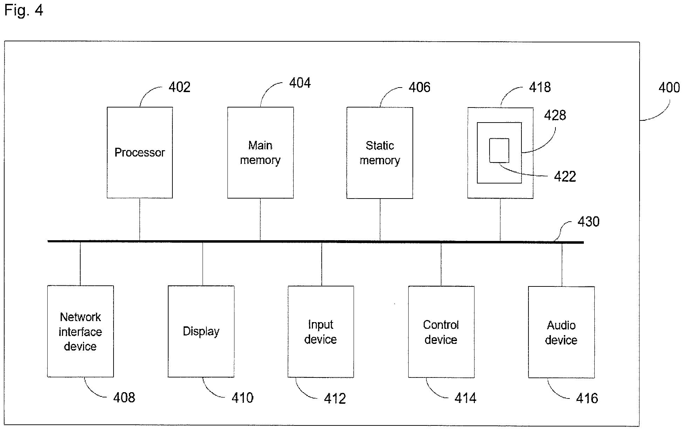

Figure 4 illustrates a block diagram of one implementation of a computing device 400 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 400 includes a processing device 402, a main memory 404 (e.g., read-only memory (ROM), flash memory, dynamic random access memory (DRAM) such as synchronous DRAM (SDRAM) or Rambus DRAM (RDRAM), etc.), a static memory 406 (e.g., flash memory, static random access memory (SRAM), etc.), and a secondary memory (e.g., a data storage device 418), which communicate with each other via a bus 430.

Processing device 402 represents one or more general-purpose processors such as a microprocessor, central processing unit, or the like. More particularly, the processing device 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 402 may also be one or more special-purpose processing devices such as an application specific integrated circuit (ASIC), a field programmable gate array (FPGA), a digital signal processor (DSP), network processor, or the like. Processing device 402 is configured to execute the processing logic (instructions 422) for performing the operations and steps discussed herein.

The computing device 400 may further include a network interface device 408. The computing device 400 also may include a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

The data storage device 418 may include one or more machine-readable storage media (or more specifically one or more non-transitory computer-readable storage media) 428 on which is stored one or more sets of instructions 422 embodying any one or more of the methodologies or functions described herein. The instructions 422 may also reside, completely or at least partially, within the main memory 404 and/or within the processing device 402 during execution thereof by the computer system 400, the main memory 404 and the processing device 402 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as " receiving", "determining", "obtaining", "sending," "implementing," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A method of providing an asymmetric key pair for protecting secret data for a device, the device being configured for executing applications using the secret data and being communicatively coupled to a first hardware module, the method comprising:
generating an asymmetric key pair for the device; the key pair comprising a device public key and a device private key
digitally signing the device public key at the device to generate a first certificate;
sending the first certificate to the first hardware module;
verifying the first certificate at the hardware module, and responsive to the verification being successful, digitally signing the device public key at the first hardware module to generate a second certificate;
sending the second certificate to the device;
verifying the second certificate at the device; and
responsive to the verification being successful, making available the first and second certificates for storage and/or further usage.

2. The method as claimed in claim 1 wherein the first certificate is signed by a device sign key, and the second certificate is signed by a first hardware module sign key, for respective authentication; and optionally wherein the first and second certificates are stored in a memory of the device or sent to a key management system for further storage and usage.

3. A method of providing a symmetric key for protecting secret data for a device, the device being configured for executing applications using the secret data and being communicatively coupled to a second hardware module, the method comprising:
receiving at the second hardware module first and/or second certificates for verifying a device public key of an asymmetric key pair associated with the respective device;
receiving at the second hardware module a provisioning key from a secure source, the secure source being communicatively coupled with the device and the second hardware module; and,
if verification of the first and/or second certificates is successful, the method further comprising:
sending the provisioning key encrypted with the device public key to the device, wherein the provisioning key is decrypted using a device private key of the asymmetric key pair;
sending a first secret seed signed by the provisioning key from the external source to the device, wherein the first secret seed is verified and decrypted using the decrypted provisioning keys; and
computing the symmetric key using a secret key derivation function at the device with inputs to the secret key derivation function comprising the first secret seed, the device public key and a second secret seed, wherein the second secret seed is obtained, stored or generated in the device.

4. The method as claimed in claim 3 further comprising,
signing the provisioning key with a provisioning sign key at the secure source;
sending the signed provisioning key to the second hardware module using a second hardware module key;
at the second hardware module, extracting the signed provisioning key and encrypting the signed provisioning key with the device public key;
at the device, decrypting the provisioning key with device private key of the asymmetric key pair and verifying the signature of the provisioning key using a public key associated with the provisioning key that is available to the device.

5. The method as claimed in claim 3 or 4 wherein the first secret seed is a unique identifier for the device and the second secret seed is a secret global key unique to the device and optionally generated within a trusted module within the device

6. The method as claimed in any one of claims 3 to 5 wherein the first and second certificates for the device public key are obtained by the second hardware module using the method of any one of claims 1 or 2.

7. The method as claimed in any one of the preceding claims, wherein the device is a System of Chip (SoC) comprising a trusted module for the generation and/or storage of one or more encryption key and/or secret seeds for one or more key derivation functions, and wherein the first and/or second hardware modules are hardware security modules in a manufacturing facility or environment.

8. A method of securely enrolling asymmetric and symmetric encryption keys associated with a device at a key management system, the device being configured for executing applications using the secret data and being communicatively coupled with the key management system, the method comprising the steps of:
obtaining first and/or second certificates for verifying a device public key of an asymmetric key pair associated with the respective device;
verifying the device public key at the key management system;
obtaining a first secret seed, the first secret seed originating from a secure source and comprising a unique identifier for the device;
obtaining a second secret seed, the second secret seed being uniquely associated with the device;
executing a secret key derivation function associated with the respective device at the key management system to compute a symmetric key, wherein the inputs to the key derivation function include: the first secret seed from the secure source, second secret seed from the device and the extracted device public key;
storing the computed symmetric key and the device public key of the asymmetric key pair at the key management system.

9. The method as claimed in claims 8 wherein the first and second certificates for the device public key are obtained using the method of any of any one of claims 1 or 2.

10. The method as claimed in any one of claims 8 or 9 wherein the steps of obtaining the first and second secret seeds are implemented using the method of any one of claims 3 to 7.

11. A device configured for executing applications using secret data, the device being communicatively coupled to at least one hardware security module, the device comprising a memory unit, one or more transceiver units and one or more processing units, the one or more processing units being configured to:
generate an asymmetric key pair for the device and store the key pair in a memory; the key pair comprising a device public key and a device private key
digitally sign the device public key to generate a first certificate;
transmit the first certificate to a first hardware module for verification;
if the verification of the first certificate is successful, receive a second certificate from the first hardware module, the second certificate being digitally signed by the first hardware module;
verify the second certificate at the device; and
responsive to the verification of the second certificate being successful, provision the first and second certificates for storage and/or further usage.

12. A device configured for executing applications using secret data, the device being communicatively coupled to at least one hardware security module, the device comprising a memory unit, one or more transceiver units and one or more processing units, the processing units being configured to:
receive from a second hardware module a provisioning key encrypted with a device public key of an asymmetric key pair that has been verified using first and/or second certificates, wherein the provisioning key is decrypted using a device private key of the asymmetric key pair associated with the device and;
receive from a secure external source, a first secret seed signed by the provisioning key, wherein the first secret seed is verified and decrypted using the decrypted provisioning keys; and
compute a symmetric encryption key or keys using a secret key derivation function with inputs to the secret key derivation function comprising the first secret seed, the device public key and a second secret seed; wherein the second secret seed is obtained, stored or generated in the device,
wherein the processing units of the device optionally comprise the device of claim 11.

13. A hardware security module communicatively coupled to a device for the provision of an asymmetric key pair for protecting secret data for the device, the device being configured for executing applications using the secret data, the hardware security module comprising one or more processing modules configured to:
receive a first certificate from the device, the first certificate being generated by digitally signing a device public key of an asymmetric encryption key pair of the device;
verify the first certificate at the hardware module;
if the verification is successful, digitally sign the device public key to generate a second certificate; and
transmit the second certificate to the device for verification.

14. A hardware security module communicatively coupled to a device for the provision of a symmetric key for protecting secret data for the device, the device being configured for executing applications using the secret data, the hardware security module comprising one or more processing modules configured to:
verify a device public key of an asymmetric key pair associated with the device using first and/or second certificates of the asymmetric key pair for the respective device; receive a provisioning key from a secure source, the secure source being communicatively coupled with the device and the hardware module; and
responsive to successful verification of the first and/or second certificates, transmit the provisioning key encrypted with the device public key to the device for decryption, wherein the provisioning key enables the device to use a first secret seed received from the secure source to generate the symmetric key with a second secret seed stored or generated by the device.

15. A key management system communicatively connected to a device for managing encryption keys to protect secret data associated with the device, the device being configured for executing applications using the secret data, the key management system comprising one or more processing modules, one or more transceiver modules and one or more storage modules, wherein the key management system is configured to:
access digital certificates associates with an asymmetric key pair for the device, and extract the asymmetric public key of the key pair;
obtain a first secret seed from a secure source external to the device and the key management system
obtain a second secret seed associated with the device
implement a key derivation function to generate a symmetric key for the device;
store or provide for further use the asymmetric and symmetric keys for the device, the keys being for accessing secret data associated with the device to execute applications requiring the secret data.
